# EUROPÄISCHE PATENTSCHRIFT

(11) **EP 2 127 928 B1**
(45) Veröffentlichungstag und Bekanntmachung des Hinweises auf die Patenterteilung: **07.08.2013**
(21) Anmeldenummer: 09006417.1
(22) Anmeldetag: 12.05.2009
(51) Int. Cl.: B60J 5/06, E05D 15/10

(54) **Schiebetür für ein Fahrzeug**
Sliding door for a vehicle
Porte coulissante pour véhicule

(30) Priorität: 30.05.2008 DE 102008026137
(43) Veröffentlichungstag der Anmeldung: 02.12.2009
(73) Patentinhaber: DURA Automotive Body & Glass Systems GmbH, 58840 Plettenberg (DE)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- EP-A1- 1 367 204
- EP-A2- 1 688 568
- WO-A1-2007/049801
- DE-A1- 19 723 837
- DE-A1-102004 010 619
- DE-A1-102004 039 885
- DE-C1- 19 634 369
- DE-C1- 19 704 811
- FR-A1- 2 892 142
- JP-A- 2003 214 015
- US-A1- 2006 267 375

## Beschreibung

Die Erfindung betrifft eine Schiebetüre für ein Fahrzeug, insbesondere für ein Kraftfahrzeug.

Aus der EP 1 721 768 A1 ist eine Schiebetüre für Kraftfahrzeuge bekannt, die an ihrer Innenseite eine Führungsschiene aufweist. An der Führungsschiene ist ein Gleitschlitten längsverschieblich gelagert. Ferner umfaßt die Schiebetüre einen Scharnierbügel, der an dem Gleitschlitten und an einem Karosserieflansch oder einem sonstigen Karosserierteil drehbar gelagert ist.

Die prioritätsälteren, nicht vorveröffentlichten deutschen Patentanmeldungen DE 10 2007 035 230.3, 10 2007 A1 DE 10 2007 035 231 A1 und DE 10 2008 016 650 B3 zeigen ebenfalls Schiebetüren für Kraftfahrzeuge.

Aus der US 2006/267375 A1 ist eine Schiebetüre nach dem Oberbegriff des Anspruchs 1 bekannt.

Aufgabe der Erfindung ist es, eine verbesserte Schiebetüre für ein Fahrzeug, insbesondere für ein Kraftfahrzeug, vorzuschlagen.

Erfindungsgemäß wird diese Aufgabe durch die Merkmale des Anspruchs 1 gelöst. Die Schiebetüre umfaßt eine Führungsschiene. An der Führungsschiene ist ein Gleitschlitten längsverschieblich gelagert. Die Schiebetüre umfaßt ferner einen Scharnierbügel, der an dem Gleitschlitten und an einem Karosserieflansch drehbar gelagert ist, und einen Steuerhebel, der an dem Gleitschlitten und an einem oder dem Karosserieflansch oder sonstigen Karosserieteil drehbar gelagert ist. Der Steuerhebel weist einen Hebelarm auf, an dem ein Führungsstift vorgesehen ist, der in einer an der Schiebetüre vorgesehenen Führungsbahn geführt ist.

Vorteilhafte Weiterbildungen sind in den Unteransprüchen beschrieben.

Vorzugsweise ist die Schiebetüre an dem dem Scharnierbügel abgewandten Ende arretierbar. Zu diesem Zweck kann an dem Fahrzeug ein Scharnierbolzen für eine Aufnahme an der Schiebetüre vorgesehen sein. Der Scharnierbolzen befindet sich vorzugsweise in dem dem Scharnierbügel abgewandten Bereich der Türöffnung. Die Aufnahme, die vorzugsweise U-förmig ist, ist vorzugsweise an dem dem Scharnierbügel in der geschlossenen Stellung der Schiebetüre abgewandten Ende der Schiebetüre vorgesehen. In der geschlossenen Stellung der Schiebetüre kann der Scharnierbolzen in der Aufnahme arretiert werden. Die Anordnung kann allerdings auch umgekehrt getroffen sein, also in der Weise, daß der Scharnierbolzen an der Schiebetüre und die Aufnahme an dem Fahrzeug vorgesehen sind.

Erfindungsgemäß ist vorgesehen, daß die Führungsbahn relativ zur Führungsschiene geneigt verläuft. Hierdurch kann die Position des Führungsstifts und damit des Gleitschlittens relativ zur Führungsschiene definiert werden. Die Führungsbahn verläuft vorzugsweise durchgehend geneigt, also derart geneigt, daß überall eine von Null verschiedene Neigung vorhanden ist und daß diese Neigung überall in dieselbe Richtung weist. Vorteilhaft ist es, wenn die Führungsbahn in Richtung von dem Scharnierbügel weg nach außen geneigt verläuft. Die Neigung der Führungsbahn kann über ihre gesamte Länge gleich groß sein. Es ist allerdings auch möglich, daß die Führungsbahn Abschnitte mit unterschiedlich großer Neigung aufweist.

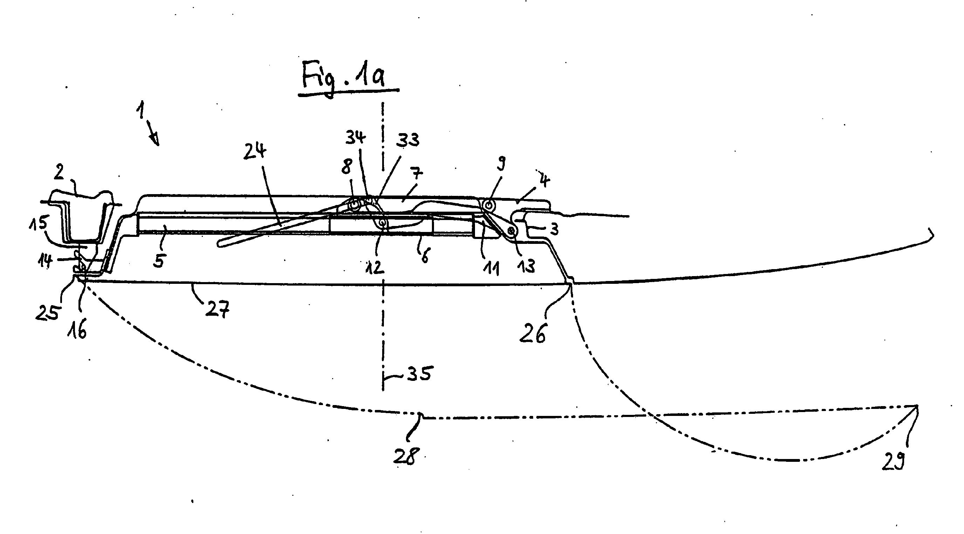

Ein Ausführungsbeispiel der Erfindung wird nachstehend anhand der beigefügten Zeichnung im einzelnen erläutert. In der Zeichnung zeigt
- Fig. 1a: eine Ausführungsform einer Schiebetüre für ein Kraftfahrzeug mit einer durchgehend linearen Führungsbahn in der geschlossenen Stellung in einer schematischen Ansicht von oben,
- Fig. 1 b-d: die Öffnungsbewegung der Schiebetüre gemäß Fig. 1a von der geschlossenen Stellung in die geöffnete Stellung,
- Fig. 1e: die Schiebetüre gemäß Fig. 1a-d in der vollständig geöffneten Stellung und
- Fig. 2a-e: Teile der Darstellungen der Fig. 1a-e in einem vergrößerten Maßstab.

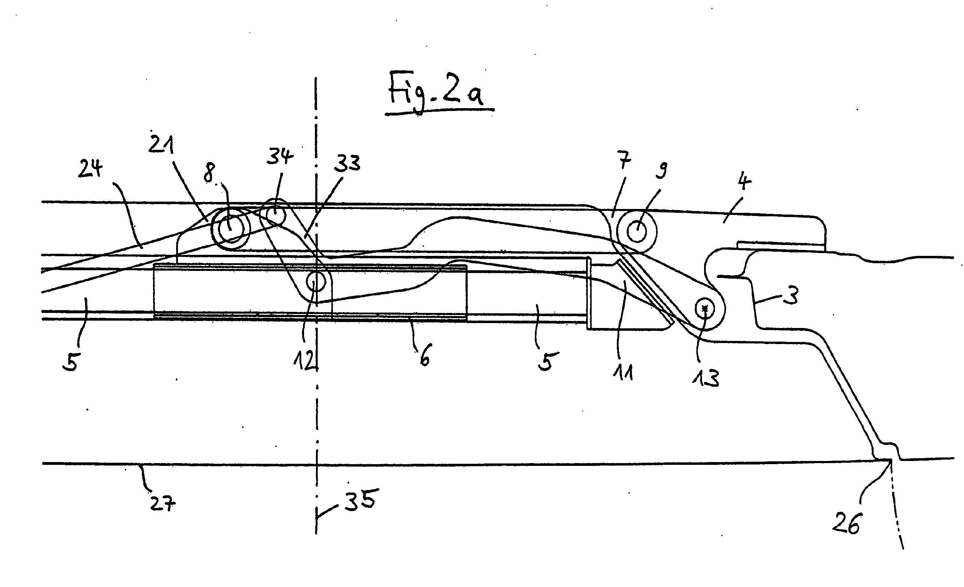

In Fig. 1a und 2a befindet sich die Schiebetüre 1 in der vollständig geschlossenen Stellung. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Gleitschlitten 6 ist eine Gelenkplatte 21 befestigt, die die Gelenke 8 und 12 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1a gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist einen Hebelarm 33 auf, der sich von dem Gelenk 12 nach innen erstreckt. Dabei knickt der Hebelarm 33 gegenüber der Verbindungslinie zwischen den Gelenken 13 und 12, also der Längserstreckung des Steuerhebels 11, nach innen ab. Im Ausführungsbeispiel knickt der Hebelarm 33 in einem annähernd rechten Winkel nach innen ab.

An dem Hebelarm 33 ist im Bereich von dessen Ende ein Führungsstift 34 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1a und 2a gezeigt ist, liegt der Scharnierbolzen 16 in der U-förmigen Aufnahme 14, und zwar im Bereich von deren Ende. Der Führungsstift 34 befindet sich im Bereich des hinteren, inneren Endes der Führungsbahn 24. Der Steuerhebel 11 weist von dem Gelenk 13 nach vorne. Der Hebelarm 33 weist von dem Gelenk 12 nach innen.

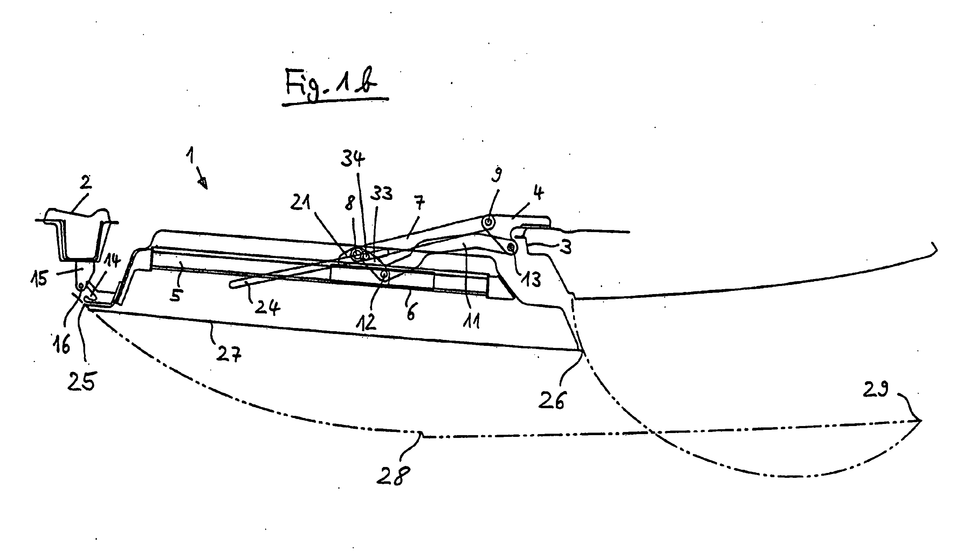

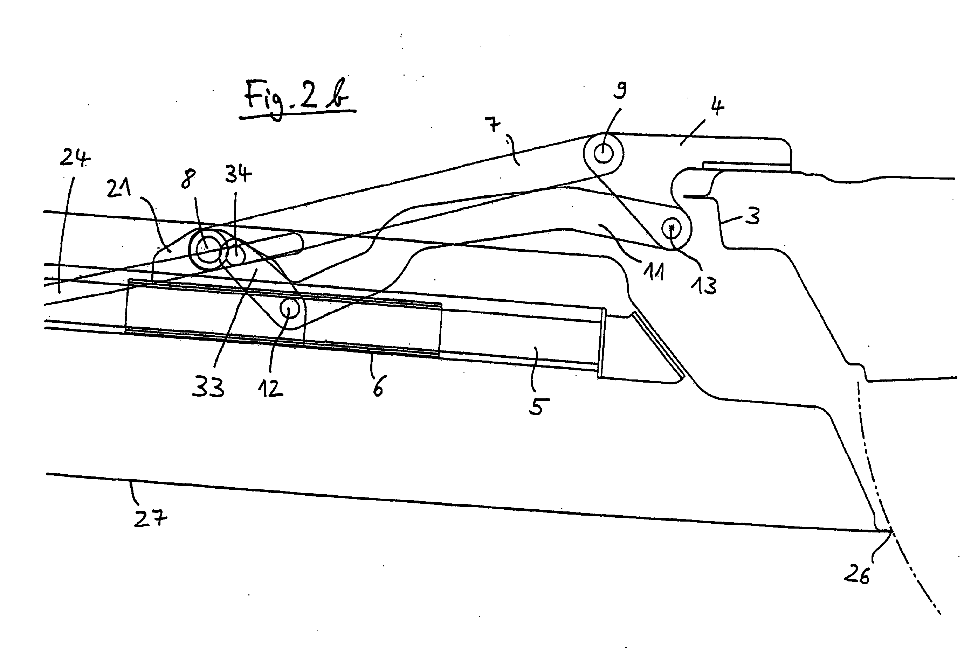

Im Verlauf der Öffnungsbewegung werden anschließend nacheinander die Stellungen nach Fig. 1b bis 1e bzw. die Stellungen nach Fig. 2b bis 2e durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

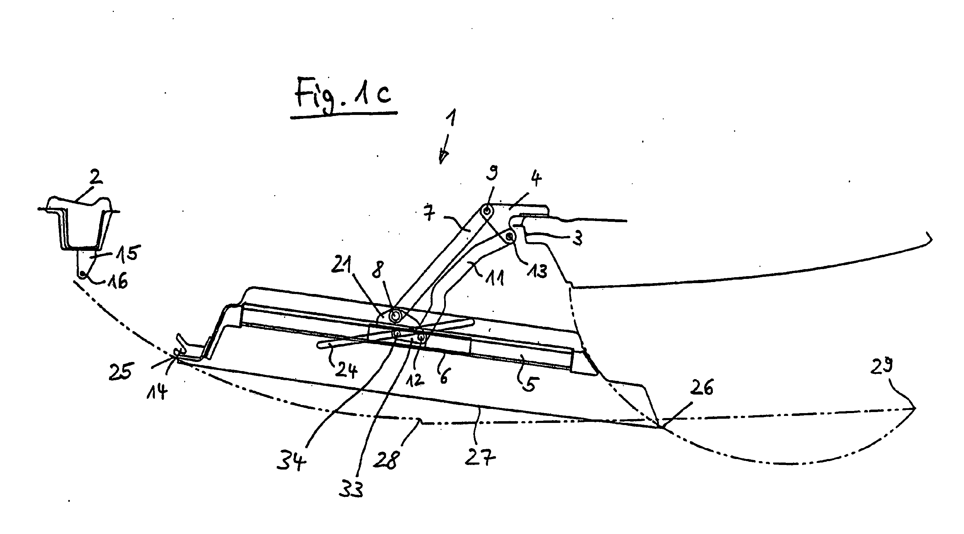

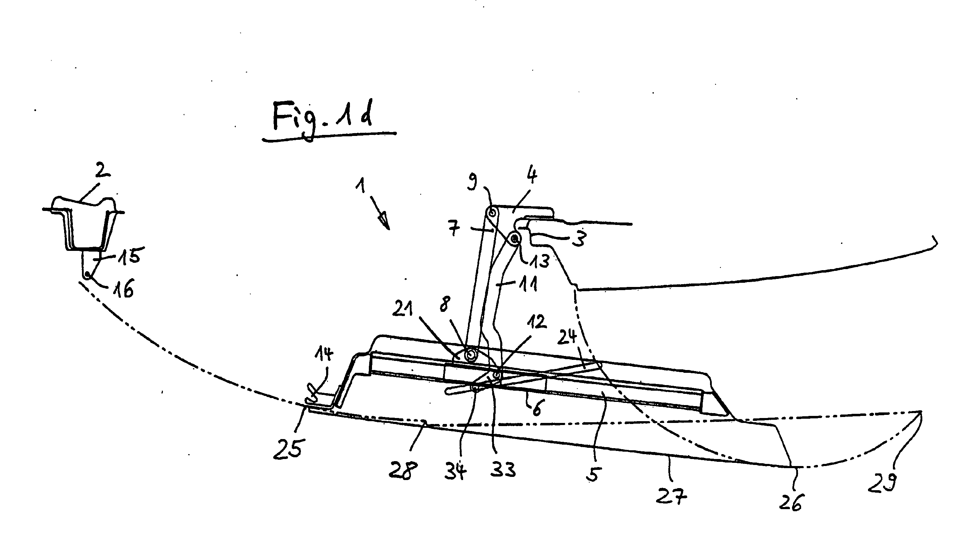

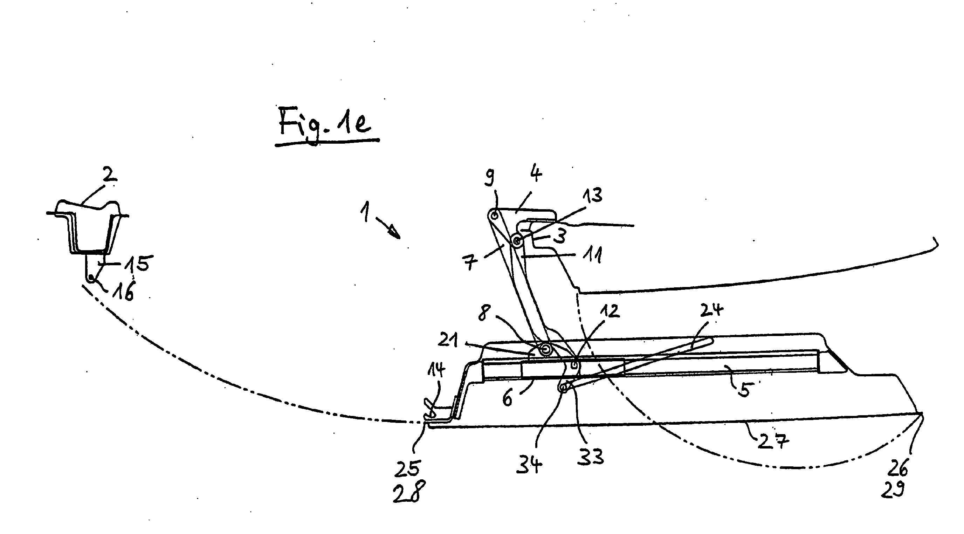

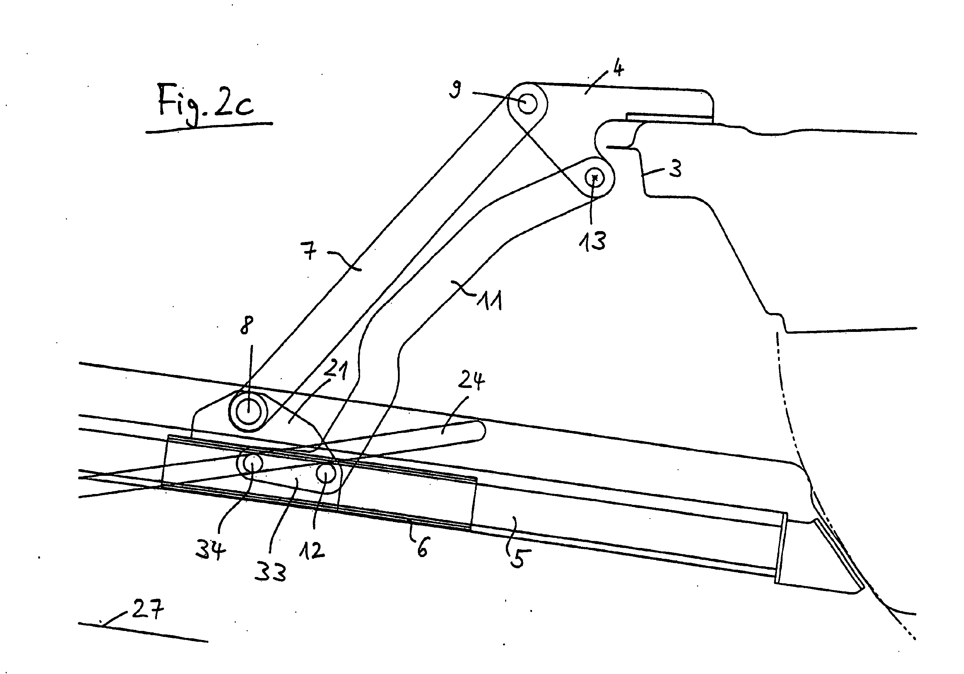

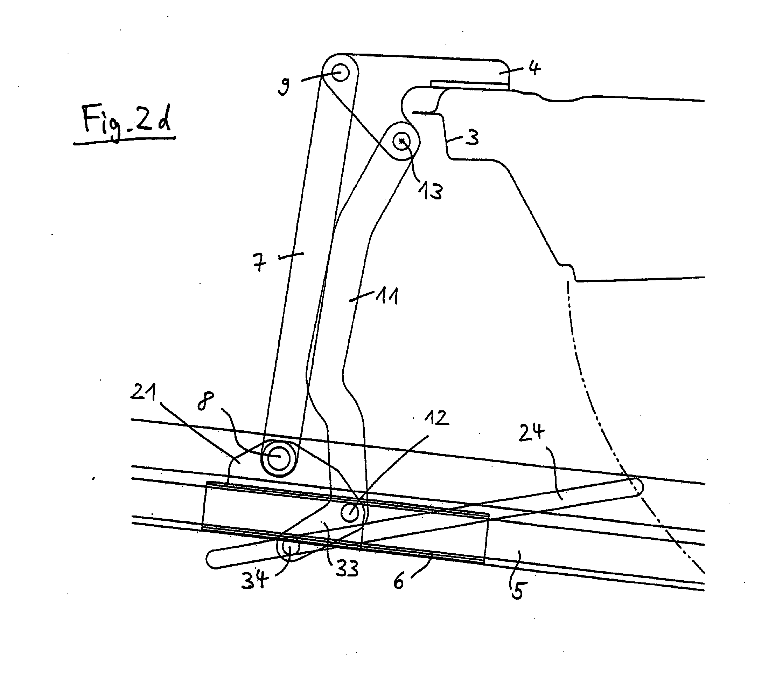

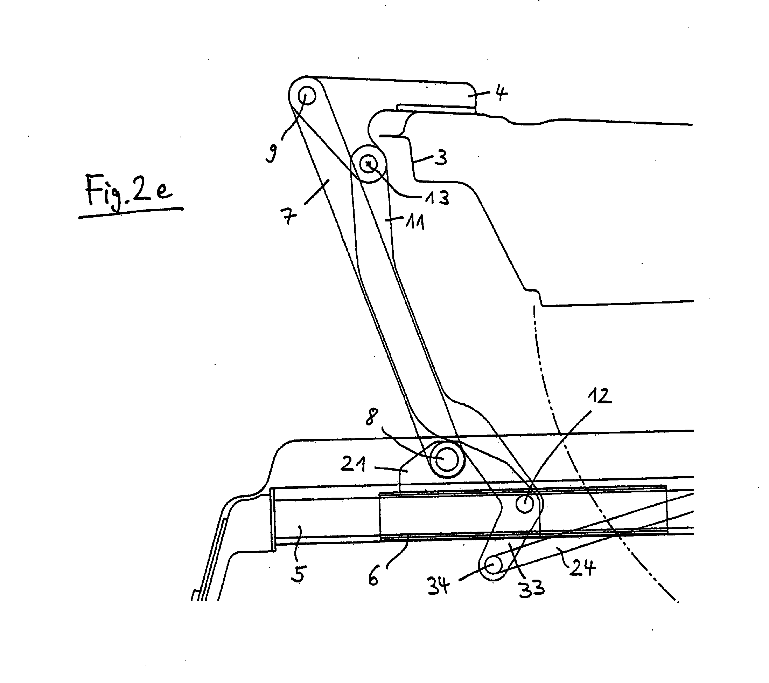

Ohne den Führungsstift 34 könnte der Gleitschlitten 6 auf der Führungsschiene 5 frei verschoben werden. Der in der Führungsbahn 24 geführte Führungsstift 34 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 der Ausführungsform nach Fig. 1 und 2 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 34 relativ zur Führungsschiene 5 und zum Gleitschlitten 6 nach außen, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 um eines oder mehrere der Gelenke 9, 8, 13, 12.

Die vollständig geöffnete Stellung der Schiebetüre 1 ist in Fig. 1e und 2e dargestellt. Der Hebelarm 33 wurde entgegen dem Uhrzeigersinn verschwenkt. Im Ausführungsbeispiel wurde der Hebelarm 33 um etwas mehr als 90° entgegen dem Uhrzeigersinn verschwenkt. Der Führungsstift 23 hat das vordere, geschlossene Ende der Führungsbahn 24 erreicht. Der Steuerhebel 11 und der Scharnierbügel 7 wurden um einen Winkel von etwa 120° entgegen dem Uhrzeigersinn um die Gelenke 13 und 9 verschwenkt.

Wenn die Schiebetüre 1 geschlossen werden soll, werden, ausgehend von der vollständig geöffneten Stellung gemäß Fig. 1e und 2e, die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 34 übertragen und von dort über den Hebelarm 33 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1 und 2 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

Durch die Erfindung wird es ermöglicht, die Schiebetüre durch die Einleitung einer einzigen Bewegung zu öffnen und zu schließen. Insbesondere kann die Schiebetüre durch eine Bewegung der Führungsschiene 5 relativ zu dem Gleitschlitten 6 geöffnet und geschlossen werden. Es ist allerdings auch möglich, die Öffnungsbewegung und Schließbewegung der Schiebetüre auf andere Weise zu erzeugen und einzuleiten, wie oben beschrieben. Durch die Erfindung kann ferner eine Schiebetüre realisiert werden, deren bewegliche Teile in einer Richtung quer zur Fahrzeug-Längsachse nur sehr wenig Platz benötigen. Die maximale Breite dieser beweglichen Teile wird vom Abstand zwischen der Lage des Führungsstifts 34 in der Fig. 1a, 2a und der Lage des Führungsstifts 34 in der Fig. 1e, 2e bestimmt.

Es ist möglich, daß die Führungsbahn 24 an ihrem hinteren, inneren Ende einen gekrümmten Abschnitt aufweist, dessen Neigung gegenüber der Führungsschiene 5 größer ist als der lineare Bereich (in der Zeichnung nicht dargestellt). Hierdurch verläuft die Öffnungsbewegung des hinteren Endes 26 des äußeren Türblechs 27 aus der geschlossenen Stellung gemäß Fig. 1a, 2a in einem rechten Winkel, also noch steiler als bei Fig. 1a, 2a. Durch die Gestaltung der Neigung der Führungsbahn kann das Ausschwenkverhalten der Schiebetüre gesteuert werden.

Vorteilhaft ist es, wenn der Führungsstift 34 während des gesamten Bewegungsablaufs auf der dem Karosserieflansch 4 bzw. den Gelenken 9, 13 abgewandten Seite einer gedachten Linie 35 liegt, die durch das Gelenk 12 verläuft, und zwar senkrecht zur Verbindungslinie zwischen den Gelenken 13, 12 des Steuerhebels 11. In Fig. 1a, 2a ist diese Linie 35 beispielhaft eingezeichnet. Dadurch, daß der Führungsstift 34 während des gesamten Bewegungsablaufs vor dieser Linie 35 liegt, wird eine "Übertotpunktlage" vermieden, die die Öffnungsbewegung und/oder Schließbewegung der Schiebetüre behindern oder unmöglich machen könnte.

## Patentansprüche

1. Schiebetüre für ein Fahrzeug mit
einer Führungsschiene (5),
einem Gleitschlitten (6), der an der Führungsschiene (5) längsverschieblich gelagert ist,
einem Scharnierbügel (7), der an dem Gleitschlitten (6) und an einem Karosserieflansch (4) drehbar (8, 9) gelagert ist,
einem Steuerhebel (11), der an dem Gleitschlitten (6) und an einem Karosserieflansch (4) drehbar (12, 13) gelagert ist und der einen Hebelarm (33) aufweist, an dem ein Führungsstift (34) vorgesehen ist, der in einer an der Schiebetüre (1) vorgesehenen Führungsbahn (24) geführt ist,
**dadurch gekennzeichnet,**
**daß** die Führungsbahn (24) relativ zur Führungsschiene (5) geneigt verläuft.

2. Schiebetüre nach Anspruch 1, **dadurch gekennzeichnet, daß** die Schiebetüre (1) an dem dem Scharnierbügel (7) abgewandten Ende arretierbar (14, 16) ist.

3. Schiebetüre nach einem der vorhergehenden Ansprüche, **dadurch gekennzeichnet, daß** die Führungsbahn (24) in Richtung von dem Scharnierbügel (7) weg nach außen geneigt verläuft.

## Claims

1. Sliding door for a vehicle, having
a guide rail (5),
a sliding carriage (6), which is mounted on the guide rail (5) in a longitudinally displaceable manner,
a hinge bracket (7), which is mounted rotatably (8, 9) on the sliding carriage (6) and on a body flange (4),
a control lever (11), which is mounted rotatably (12, 13) on the sliding carriage (6) and on a body flange (4), and which has a lever arm (33), on which a guiding pin (34) is provided, which is guided in a guiding path (24) provided at the sliding door (1),
**characterised in that**,
the guiding path (24) runs at an incline relative to the guide rail (5).

2. Sliding door according to claim 1, **characterised in that** the sliding door (1) can be locked (14, 16) on the end facing away from the hinge bracket (7).

3. Sliding door according to one of the preceding claims, **characterised in that** the guiding path (24) runs at an outward incline away from the hinge bracket (7).

## Revendications

1. Porte coulissante pour véhicule comprenant :
- un rail de guidage (5),
- un chariot coulissant (6) qui est monté sur le rail de guidage (5) de façon à pouvoir être déplacé dans le sens longitudinal,
- un arc de charnière (7) qui est monté sur le chariot coulissant (6) et sur un rebord de carrosserie (4) de façon à pouvoir tourner (8, 9),
- un levier de commande (11) qui est monté sur le chariot coulissant (6) et sur un rebord de carrosserie (4) de façon à pouvoir tourner (12, 13) et qui présente un bras de levier (33) sur lequel est prévue une tige de guidage (34) qui est guidée dans une glissière de guidage (24) prévue au niveau de la porte coulissante (1),
**caractérisée**
**en ce que** la glissière de guidage (24) s'étend de façon inclinée par rapport au rail de guidage (5).

2. Porte coulissante selon la revendication 1, **caractérisée en ce que** la porte coulissante (1) peut être bloquée (14, 16) au niveau de l'extrémité opposée à l'arc de charnière (7) .

3. Porte coulissante selon l'une des revendications précédentes, **caractérisée en ce que** la glissière de guidage (24) s'étend de façon inclinée vers l'extérieur dans la direction allant à l'opposé de l'arc de charnière (7).
